# EUROPÄISCHE PATENTSCHRIFT

(11) **EP 4 051 544 B1**
(45) Veröffentlichungstag und Bekanntmachung des Hinweises auf die Patenterteilung: **30.08.2023**
(21) Anmeldenummer: 20792623.9
(22) Anmeldetag: 14.10.2020
(51) Int. Cl.: B60R 22/03

(54) **GURTBRINGER UND FAHRZEUGSITZ MIT EINEM GURTBRINGER**
SEAT BELT PRESENTER AND VEHICLE SEAT WITH A SEAT BELT PRESENTER
DISPOSITIF DE PRÉSENTATION DE CEINTURE DE SÉCURITÉ ET SIÈGE DE VÉHICULE DOTÉ D'UN DISPOSITIF DE PRÉSENTATION DE CEINTURE DE SÉCURITÉ

(30) Priorität: 30.10.2019 DE 102019216705
(43) Veröffentlichungstag der Anmeldung: 07.09.2022
(73) Patentinhaber: Autoliv Development AB, 447 83 Vårgårda (SE)
(72) Erfinder: RETTIG, Marcel, 22111 Hamburg (DE); JABUSCH, Ronald, 25336 Elmshorn (DE)
(74) Vertreter: Müller Verweyen
(86) Internationale Anmeldenummer: PCT/EP2020/078882
(87) Internationale Veröffentlichungsnummer: WO 2021/083666

(56) Entgegenhaltungen:
- EP-A2- 1 693 257
- DE-A1- 3 302 356
- DE-A1- 10 310 793
- DE-A1- 10 314 464
- US-A- 5 390 982

## Beschreibung

Die vorliegende Erfindung betrifft einen Gurtbringer mit den Merkmalen des Oberbegriffs von Anspruch 1 und einen Fahrzeugsitz mit einem Gurtbringer mit den Merkmalen des Oberbegriffs von Anspruch 11. DE3302356A1 offenbart einen Gurtbringer gemäß dem Oberbegriff des Anspruchs 1.

Fahrzeugsitze mit einer integrierten Sicherheitsgurteinrichtung werden z.B. in Cabriolets verwendet, welche keine B-Säule aufweisen. Ferner ist es die Bestrebung, in modernen Fahrzeugen mit autonomen Fahrsystemen Fahrzeugsitze zu verwenden, welche integrierte Sicherheitsgurteinrichtungen aufweisen, damit die Fahrzeugsitze möglichst frei bewegt werden können, ohne dass der auf dem Fahrzeugsitz sitzende Insasse dabei die geometrische Zuordnung zu der Sicherheitsgurteinrichtung und insbesondere zu dem ihn zurückhaltenden Gurtband der Sicherheitsgurteinrichtung verliert.

Gurtbringer haben grundsätzlich die Aufgabe, ein Gurtband einer Sicherheitsgurteinrichtung zur Erleichterung des Anschnallvorganges aus einer Parkstellung in eine ergonomisch griffgünstige Präsentierstellung zu verbringen. Sofern die Sicherheitsgurteinrichtung in einer Rückenlehne eines Fahrzeugsitzes integriert ist, ist der Gurtbringer ebenfalls in der Rückenlehne des Fahrzeugsitzes angeordnet und ergreift das Gurtband nach dem Austritt aus der Rückenlehne. Der Gurtbringer verfährt das Gurtband bei einer Aktivierung aus einer in Bezug zu dem Insassen oberhalb und zurückversetzt zu einer Schulter angeordneten Parkstellung in eine seitliche, in Richtung des Insassen vorgeschobene Präsentierstellung. Damit kann der Insasse das Gurtband in der Präsentierstellung ergonomisch griffgünstiger durch eine Bewegung des Armes bis in die seitliche Präsentierstellung ergreifen, statt wie bisher durch eine Bewegung mit der Hand über die jeweils andere Schulter nach hinten bis in die Parkstellung, welche mit einer erheblich extremeren Rotationsbewegung des Oberkörpers und der Schulter verbunden war.

Die Parkstellung des Gurtbandes entspricht bei sitzintegrierten Sicherheitsgurteinrichtungen der Position, welche das Gurtband im abgeschnallten Zustand bei maximaler Aufwickellänge auf der Gurtwelle einnimmt. Dabei läuft das Gurtband durch einen an dem Fahrzeugsitz vorgesehenen Schlitz in das Innere des Fahrzeugsitzes hinein und wird im weiteren Verlauf auf die Gurtwelle der in dem Fahrzeugsitz vorgesehenen Sicherheitsgurteinrichtung aufgewickelt. Dabei muss das Gurtband nicht unmittelbar auf die Gurtwelle auflaufen, es ist auch möglich, dass das Gurtband weiter einmal oder mehrmalig innerhalb des Fahrzeugsitzes umgelenkt wird, bevor es auf der Gurtwelle aufgewickelt wird, sofern der Gurtaufroller mit der Gurtwelle an einer in Bezug zu dem Schlitz entfernteren Stelle im Fahrzeugsitz angeordnet werden muss. Durch den Schlitz in dem Fahrzeugsitz werden ferner die Zuführrichtung und Zuführposition des Gurtbandes auf den Insassen im angeschnallten Zustand definiert, welche wiederum aus den Gründen einer optimierten Rückhaltung und der Geometrie des Fahrzeugsitzes nicht frei gewählt werden können. Damit kann es sein, dass der Schlitz in dem Fahrzeugsitz aus Gründen der Rückhaltung und der Fahrzeugsitzgeometrie so positioniert werden muss, dass der Insasse das Gurtband in der Parkstellung nur unter erheblichen Schwierigkeiten ergreifen kann. Damit sind Gurtbringer in diesem Fall von erheblicher Bedeutung zur Verbesserung des Anlegekomforts. Ferner kann die Akzeptanz der Sicherheitsgurteinrichtung seitens des Insassen erheblich erhöht werden, indem der Anlegevorgang erleichtert wird. Ein solcher Gurtbringer ist z.B. aus der Druckschrift DE 103 14 464 A1 bekannt.

Der Gurtbringer umfasst einen Zubringerarm mit einem Führungsteil, welches einen Schlitz aufweist, durch den das Gurtband geführt ist. Der Zubringerarm ist mittels eines Elektromotors aus einer Parkstellung in eine Präsentierstellung verfahrbar und weist dazu eine Verzahnung auf, in welche ein von dem Elektromotor antreibbares Zahnrad eingreift. Der Gurtbringer ist dabei so ausgebildet und angeordnet, dass der Zubringerarm bei der Bewegung aus der Parkstellung in die Präsentierstellung in einer Ebene bewegt wird, welche der Vertikalebene in Geradeausfahrtrichtung entspricht. Der Gurt wird damit aus der zurückversetzten Parkstellung in Richtung der Geradeausfahrtrichtung in die vorgeschobene Präsentierstellung bewegt. Das Führungsteil weist den Schlitz auf, durch welchen das Gurtband in der Parkstellung und der Gebrauchsstellung aus dem Fahrzeugsitz bzw. auf den Insassen geführt wird. Ferner dient das Führungsteil als eine Führung, durch welche das Gurtband während der Verfahrbewegung in die Präsentierstellung geführt wird. Der Zubringerarm definiert damit über die Bewegungskurve des Führungsteils den Verfahrweg des Gurtbandes in die Präsentierstellung. Der Gurtbringer umfasst ferner ein Gehäuse in Form eines im Querschnitt U-förmigen Blechteils, an dem der Elektromotor einschließlich eines Getriebes gehalten ist. Außerdem dient das Gehäuse zur Führung des Zubringerarmes und weist zwei Führungsrollen auf, an denen der Zubringerarm punktuell anliegt.

Vor diesem Hintergrund liegt der Erfindung die Aufgabe zugrunde einen Gurtbringer bereitzustellen, welcher einen kompakten Aufbau aufweisen soll und gleichzeitig eine funktionssichere Verfahrbewegung des Gurtbandes möglichst unabhängig von äußeren einwirkenden Kräften ermöglichen soll. Ferner ist es die Aufgabe der Erfindung, einen Fahrzeugsitz mit einer integrierten Sicherheitsgurteinrichtung bereitzustellen, welcher einen möglichst kompakten und schmalen Aufbau haben soll.

Die erfindungsgemäße Aufgabe wird durch einen Gurtbringer mit den Merkmalen von Anspruch 1 sowie durch einen Fahrzeugsitz mit den Merkmalen von Anspruch 11 gelöst. Weitere bevorzugte Weiterentwicklungen sind den Unteransprüchen, den Figuren und der zugehörigen Beschreibung zu entnehmen.

Gemäß dem Grundgedanken der Erfindung wird vorgeschlagen, dass das Gehäuse des Gurtbringers durch ein Hohlprofil mit einem länglichen Hohlraum gebildet ist, in dem der Zubringerarm angeordnet ist, und der Hohlraum in Richtung der Ausfahrbewegung des Zubringerarmes eine den Verlauf der Ausfahrbewegung vorgebende Formgebung aufweist.

Das Gehäuse mit dem erfindungsgemäß vorgesehenen und geformten Hohlraum dient dem Schutz bzw. der Aufnahme des Zubringerarmes, so dass der Zubringerarm selbst und die mit dem Zubringerarm zusammenwirkenden Teile vor äußeren mechanischen Einwirkungen verbessert geschützt sind. Ferner weist der Hohlraum außerdem eine Formgebung auf, welche den Verlauf der Ausfahrbewegung vorgibt. Soll die Ausfahrbewegung z.B. eine rein lineare Bewegung sein, so ist der Hohlraum bevorzugt ein linearer Hohlraum. Ferner kann durch einen gekrümmten Hohlraum auch eine gekrümmte Ausfahrbewegung oder durch einen Hohlraum mit einem seitlichen Versatz auch eine seitliche Versatzbewegung realisiert werden. Selbstverständlich können die beschriebenen Verläufe auch kombiniert werden. Die Formgebung des Hohlraumes entspricht damit dem Verlauf der Verfahrbewegung des Führungsteils. Dabei kann der Zubringerarm ebenfalls eine der Form des Hohlraumes entsprechende Formgebung aufweisen, so dass der Zubringerarm in der Parkstellung vollständig oder nahezu vollständig in dem Hohlraum aufgenommen werden kann bzw. diesen vollständig ausfüllt. Im Idealfall entspricht die Form des Hohlraumes der um ein Spiel maßstabsvergrößerten Form des Zubringerarmes, wodurch sich eine besonders kompakte Bauweise ergibt. Ein weiterer Vorteil der erfindungsgemäßen Lösung besteht darin, dass der Gurtbringer durch die Verwendung eines als Hohlprofil ausgebildeten Gehäuses wesentlich steifer gegenüber um die Längsachse wirkenden Torsionskräften ausgebildet werden kann, da Hohlprofile im Vergleich zu Vollprofilen mit gleichen Materialquerschnitt eine höhere Verformungsfestigkeit aufweisen. Das den Gurtbringer zur Außenseite hin schützende Gehäuse bildet damit gleichzeitig auch eine Versteifung des Gurtbringers. Dadurch kann der Materialausnutzungsgrad des Gehäuses erhöht werden, und der Gurtbringer kann unter Einhaltung einer vorgegebenen Steifigkeit kompakter und leichter ausgeführt werden.

Weiter wird vorgeschlagen, dass das Gehäuse durch wenigstens zwei schalenförmige Gehäuseteile gebildet ist, welche sich in der zusammengesetzten Form zu dem Hohlprofil ergänzen. Das Gehäuse ist zweiteilig aufgebaut, und wird erst bei der Montage des Gurtbringers zusammengesetzt. Dabei können die weiteren Teile des Gurtbringers zuerst in eines der Gehäuseteile eingesetzt werden, bevor das Gehäuse durch Aufsetzen des zweiten Gehäuseteils vervollständigt wird. Dadurch kann einerseits die Montage erleichtert werden, und andererseits können auch komplexere Gehäuseformen mit einfachen Fertigungsverfahren verwirklicht werden.

Dabei kann der Zubringerarm gekrümmt sein, und der Hohlraum kann eine zu der Krümmung des Zubringerarmes identische Krümmung aufweisen. Der Zubringerarm und der Hohlraum weisen damit eine Bogenform auf, welche eine bogenförmige Ausfahrbewegung des an dem Ende des Zubringerarmes gehaltenen Führungsteils definiert. Durch die Bogenform kann das Führungsteil bei einer entsprechenden Anordnung des Gurtbringers mit zu der Sitzfläche hin gekrümmter Zubringerschiene sowohl in Fahrtrichtung als auch unter Verringerung des Abstandes auf den auf dem Fahrzeugsitz sitzenden Insassen zu bewegt werden, wobei das Führungsteil bzw. das Gurtband zusätzlich zum Beispiel über eine Schulter des Insassen hinweg geführt werden kann.

Weiter wird vorgeschlagen, dass in dem Gehäuse eine Gleit- oder Anlagefläche vorgesehen ist, an der der Zubringerarm geführt und gelagert ist. Das Gehäuse bzw. der in dem Gehäuse geschaffene Hohlraum und die darin vorgesehenen Flächen werden damit vorteilhaft zur Schaffung einer Gleit- oder Anlagefläche verwendet, welche durch die Führung der Ausfahrbewegung des Zubringerarmes zu einer verbesserten Ausfahrbewegung genutzt wird. Weiter wird vorgeschlagen, dass die Antriebseinrichtung wenigstens abschnittsweise in dem Hohlraum angeordnet ist. Der Hohlraum wird damit zusätzlich zur Aufnahme wenigstens eines Abschnittes der Antriebseinrichtung genutzt, so dass der Gurtbringer auch mit der Antriebseinrichtung sehr kompakt ausgeführt werden kann. Ferner wird das Gehäuse zusätzlich zu einem Schutz der Antriebseinrichtung insbesondere zu dem Schutz des Abschnittes der Antriebseinrichtung genutzt, der mit dem Zubringerarm zusammenwirkt. Dadurch kann die Antriebsbewegung mit einer verbesserten Funktionssicherheit auf den Zubringerarm übertragen werden, da die Wahrscheinlichkeit von mechanischen äußeren Einwirkungen oder des Eintritts von Schmutz verringert wird.

Erfindungsgemäß weist der Zubringerarm eine Verzahnung auf, und die Antriebseinrichtung eine zu einer Drehbewegung angetriebene feststehende erste Schnecke aufweist, welche in die Verzahnung des Zubringerarmes eingreift und bei einer Drehbewegung den Zubringerarm durch den Eingriff in die Verzahnung zu der Ausfahrbewegung antreibt. Durch die vorgeschlagene Lösung kann die rotatorische Antriebsdrehbewegung des Elektromotors sehr einfach in eine Linearbewegung des Zubringerarmes umgewandelt werden.

Die Antriebseinrichtung weist eine zu einer Drehbewegung antreibbare flexible Welle auf, mit der die Schnecke drehfest verbunden ist. Die flexible Welle ermöglicht eine Antriebsverbindung der Schnecke mit einer weiter entfernten Antriebseinheit der Antriebseinrichtung wie z.B. eines Elektromotors auch über eine nicht lineare wie z.B. eine gekrümmte Verbindungsstrecke.

Weiter wird vorgeschlagen, dass der Zubringerarm einen zweiten Hohlraum aufweist, in welchen die Antriebseinrichtung mit einem formstabilen Führungsholm eingreift. Der formstabile Führungsholm bildet eine Führung des Zubringerarmes gegenüber der Antriebseinrichtung, so dass die Antriebsbewegung mit einer verbesserten Funktionssicherheit übertragen wird, da sich der Zubringerarm damit immer in einer geführten kontrollierten Ausrichtung zu der Antriebseinrichtung auch während der Ausfahrbewegung befindet. Dabei ist der Führungsholm in seiner Querschnittsgeometrie bevorzugt so geformt, dass er unter Berücksichtigung eines Spiels dem freien Querschnitt des Hohlraumes in dem Zubringerarm entspricht, so dass der Führungsholm den Zubringerarm in alle Richtungen unterstützt und führt.

Weiter wird vorgeschlagen, dass der Zubringerarm mit einem Befestigungsansatz in dem zweiten Hohlraum des Zubringerarmes festgelegt ist.

Weiter wird vorgeschlagen, dass der erste und/oder zweite Hohlraum im Querschnitt eine vieleckige Form aufweist, an welcher sich der Zubringerarm in Bezug zu seiner Längsachse drehfest abstützt. Der Zubringerarm findet dadurch über den ersten und/oder zweiten Hohlraum eine in Bezug zu seiner Längsachse torsionsfeste Abstützung, wodurch sich ein formstabiler Verbund ergibt. Ferner können sowohl die Zubringerschiene als auch das Gehäuse als formstabile Hohlprofile mit einem besonders guten Materialausnutzungsgrad in Leichtbauweise verwirklicht werden.

Weiter wird zur Lösung der Aufgabe ein Fahrzeugsitz mit einem Gurtbringer nach einem der Ansprüche 1 bis 11, vorgeschlagen, bei dem der Gurtbringer an der Rückenlehne befestigt ist und mit dem Gehäuse in einen durch die Sitzstruktur gebildeten Freiraum hineinragt.

Die Erfindung wird im Folgenden anhand bevorzugter Ausführungsformen unter Bezugnahme auf die beigefügten Figuren erläutert. Dabei zeigt
- Fig. 1: einen erfindungsgemäßen Gurtbringer mit einem Gurtaufroller und einem in eine Präsentierstellung ausgefahrenem Gurtband, und
- Fig. 2: den erfindungsgemäßen Gurtbringer in Explosionsdarstellung, und
- Fig. 3: eine Schnittdarstellung durch den erfindungsgemäßen Gurtbringer in Schnittrichtung senkrecht zu der Ausfahrbewegung des Zubringerarmes,
- Fig. 4: einen vergrößerten Ausschnitt des Gurtbringers mit dem Führungsteil, und
- Fig. 5: eine Schnittdarstellung des Gurtbringers in Schnittrichtung parallel zu der Ausfahrbewegung durch die Längsachse mit dem Zubringerarm in der Parkstellung, und
- Fig. 6: eine Schnittdarstellung des Gurtbringers in Schnittrichtung parallel zu der Ausfahrbewegung durch die Längsachse mit dem Zubringerarm in der Präsentierstellung.

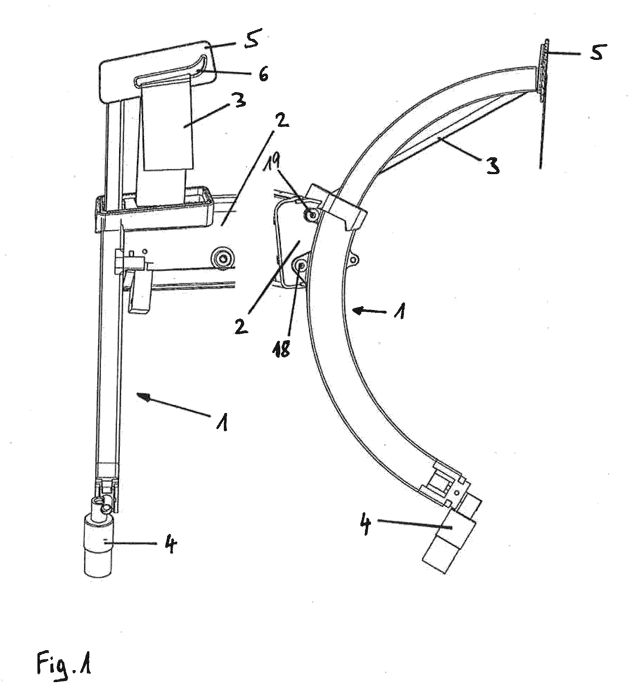

In der Figur 1 ist ein erfindungsgemäßer Gurtbringer 1 zu erkennen, welcher über zwei Befestigungspunkte 18 und 19 an einem Gurtaufroller 2 befestigt ist. Der Gurtaufroller 2 ist insbesondere ein sitzintegrierter Gurtaufroller 2, der in die Oberkante einer Rückenlehne eines Fahrzeugsitzes integriert ist. Der Gurtbringer 1 ist so an dem nicht dargestellten Fahrzeugsitz angeordnet, dass er in einen Freiraum der Rückenlehne hineinragt oder sich seitlich flach an diese anschließt, wobei die Polsterung des Fahrzeugsitzes den Gurtbringer 1 zu der Außenseite des Fahrzeugsitzes hin abdecken kann.

Der in der Figur 1 dargestellte Gurtbringer 1 befindet sich in der Präsentierstellung und umfasst ein Führungsteil 5 mit einem Schlitz 6, durch welchen ein Gurtband 3 des Gurtaufrollers 2 zu einem auf dem Fahrzeugsitz sitzenden Insassen hin geführt ist. Der Gurtbringer 1 umfasst ferner eine Antriebseinrichtung unter anderem mit einem Elektromotor 4 als Antriebseinheit.

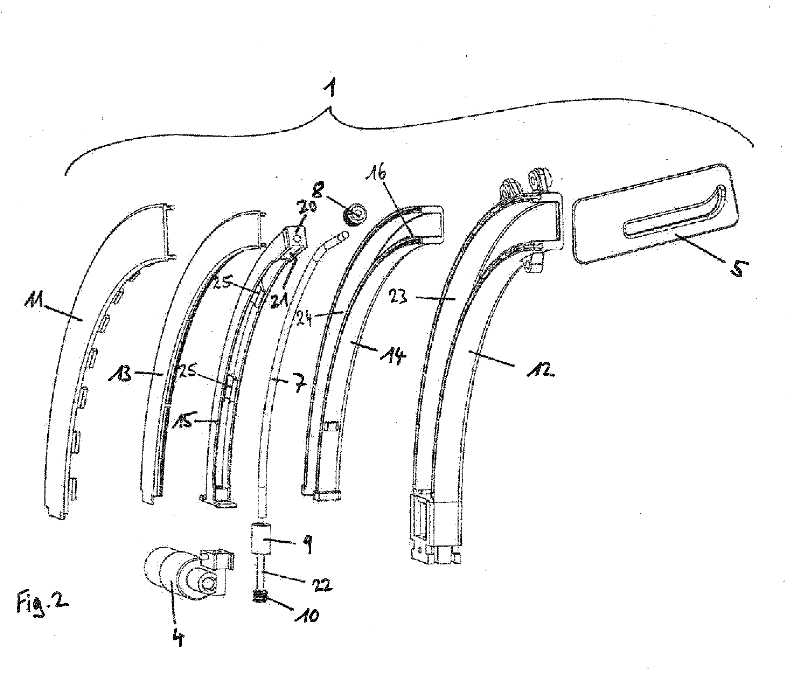

In der Figur 2 ist der Gurtbringer 1 in Explosionsdarstellung mit seinen Einzelteilen dargestellt. Der Gurtbringer 1 umfasst ein Gehäuse, welches durch den Verbund eines ersten Gehäuseteils 11 mit einem zweiten Gehäuseteil 12 gebildet ist. Das zweite Gehäuseteil 12 ist durch eine im Querschnitt U-förmige gekrümmte Gehäuseschale mit einem ersten Hohlraum 23 gebildet und dient der Aufnahme der nachfolgend noch näher erläuterten Einzelteile. Das erste Gehäuseteil 11 ist in Form einer Abdeckplatte mit einer identischen Krümmung wie das zweite Gehäuseteil 12 ausgebildet und ergänzt das zweite Gehäuseteil 12 in der montierten Stellung zu dem Gehäuse mit einem umfangsseitig geschlossenen ersten Hohlraum 23. Das erste und zweite Gehäuseteil 11 und 12 sind durch ein oder mehrere formschlüssige Rastverbindung miteinander verbunden.

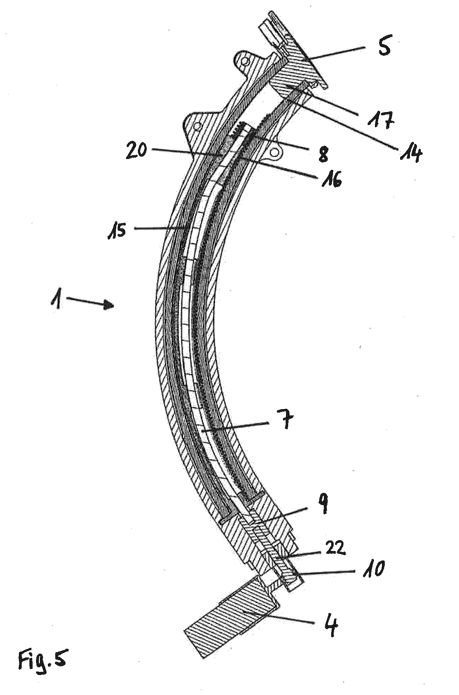

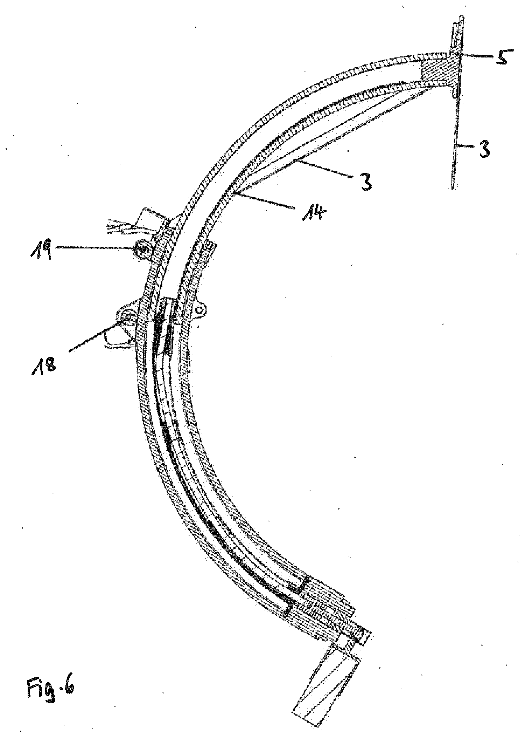

Ferner weist der Gurtbringer 1 einen Zubringerarm auf, der ebenfalls durch ein erstes im Querschnitt U-förmiges gekrümmtes schalenförmiges Teil 14 mit einem zweiten Hohlraum 24 und ein zweites Teil 13 in Form einer Abdeckplatte mit einer identischen Krümmung gebildet ist. Das zweite Teil 13 ist in der montierten Position ebenfalls durch mehrere formschlüssige Rastverbindungen mit dem ersten Teil 14 verbunden und vervollständigt damit den Zubringerarm zu einem geschlossenen Hohlprofil mit einem rechteckigen Querschnitt, indem es den zweiten Hohlraum 24 abdeckt. Das erste Teil 14 weist an seiner radial inneren Seite eine in den zweiten Hohlraum 24 hinein gerichtete radial nach außen gerichtete Verzahnung 16 auf. Ferner ist an dem oberen freien Ende des Zubringerarmes ein Führungsteil 5 mit einem Schlitz 6 vorgesehen, welches durch das Einführen eines in den Figuren 5 und 6 zu erkennenden Befestigungsansatzes 17 in den zweiten Hohlraum 24 festgelegt ist. Der Befestigungsansatz 17 ist im Querschnitt formkorrespondierend zu dem Querschnitt des zweiten Hohlraumes 24 ausgebildet, also in diesem Fall rechteckig. Der Befestigungsansatz 17 ist dadurch drehfest zu seiner Längsachse an dem Zubringerarm fixiert und kann zusätzlich durch einen Presssitz, eine Klebeverbindung, durch eine Verrastung oder dergleichen gegen einen Abzug von dem Zubringerarm gesichert sein. Das Führungsteil 5 ist so an dem Zubringerarm befestigt, dass der Schlitz 6 frei zugänglich ist, so dass das Gurtband 3 in Bezug auf den Insassen von hinten zugeführt und durch den Schlitz 6 in Richtung des Insassen weitergeführt werden kann.

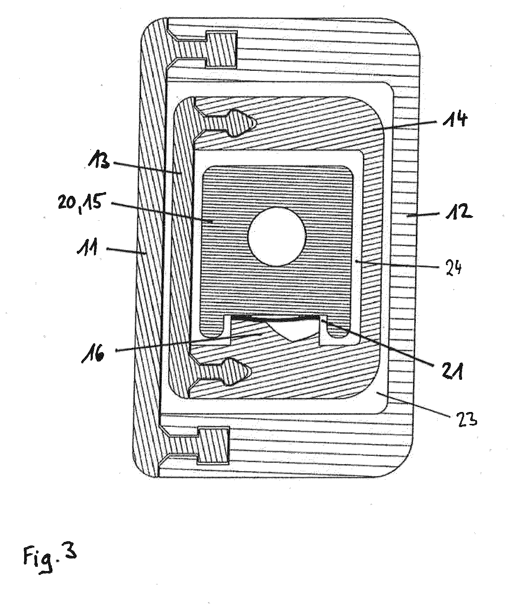

In dem zweiten Hohlraum 24 des Zubringerarmes ist ein in Bezug zu der Ausfahrbewegung des Zubringerarmes feststehender Führungsholm 15 angeordnet. Der Führungsholm 15 ist im Querschnitt U-förmig mit dem Querschnitt des zweiten Hohlraumes 24 in dem Zubringerarm entsprechenden Außenabmaßen unter Berücksichtigung eines Spiels bemessen, so dass sich der Zubringerarm an dem Führungsholm 15 abstützt und geführt ist und somit gleichzeitig Bewegungen gegenüber diesem ausführen kann. Das Gehäuse, der Zubringerarm und der Führungsholm 15 bilden eine in der Figur 3 zu erkennende kompakte Struktur, wobei das Gehäuse das äußere Teil und der Führungsholm 15 das Kernteil bildet. Der Zubringerarm ist zwischen dem Gehäuse und dem Führungsholm 15 angeordnet und wird an einer Anlagefläche bzw. Gleitfläche des Gehäuses und/oder einer Anlage- bzw. Gleitfläche des Führungsholmes 15 während der Bewegung. Alle drei Teile sind im Querschnitt ungefähr rechteckig und über die ebenfalls im Querschnitt rechteckigen Hohlräume 23 und 24 zu einem drehfesten Verbund zusammengefasst.

Ferner ist eine flexible Welle 7 vorgesehen, welche in zwei beabstandeten Rastverbindungen 25 in dem Führungsholm 15 radial fixiert ist und mit ihrem oberen Ende durch eine Öffnung eines Halteteils 20 geführt ist, welches seinerseits drehfest mit dem Ende des Führungsholmes 15 verbunden ist. Die flexible Welle 7 durchgreift die Öffnung in dem Halteteil 20 und ist über das daraus vorstehende Ende drehfest mit einer Schnecke 8 verbunden, die wiederum in die Verzahnung 16 des Zubringerarmes eingreift. An ihrem unteren Ende ist die flexible Welle 7 drehfest mit einem Verbindungsstück 9 einer Getriebewelle 22 verbunden, die ihrerseits über eine Schnecke 10 in eine Verzahnung der Antriebswelle des Elektromotors 4 eingreift und dadurch bei einer Aktivierung von dem Elektromotor 4 zu einer Drehbewegung angetrieben wird. Der Elektromotor 4, die Getriebewelle 22, die flexible Welle 7 und die Schnecke 8 bilden zusammen eine Antriebseinrichtung, welche mit der Getriebewelle 22, der flexiblen Welle 7 und der Schnecke 8 in dem zweiten Hohlraum 24 des Zubringerarmes und über diesen auch in dem ersten Hohlraum 23 des Gehäuses zu einer kompakten Bauweise mit einem Schutz gegen äußere Einwirkungen angeordnet ist. Der Gurtbringer 1 kann damit an einer beliebigen Stelle an oder innerhalb des Fahrzeugsitzes befestigt werden, ohne dass dabei auf mögliche äußere Einwirkungen auf die innerhalb des Gehäuses angeordneten Teile Antriebseinrichtung Rücksicht genommen werden muss. Insbesondere werden die flexible Welle 7 selbst und die Antriebverbindungen der flexiblen Welle zu der Schnecke 8 und zu dem Verbindungsstück 9 vor äußeren mechanischen Einwirkungen geschützt.

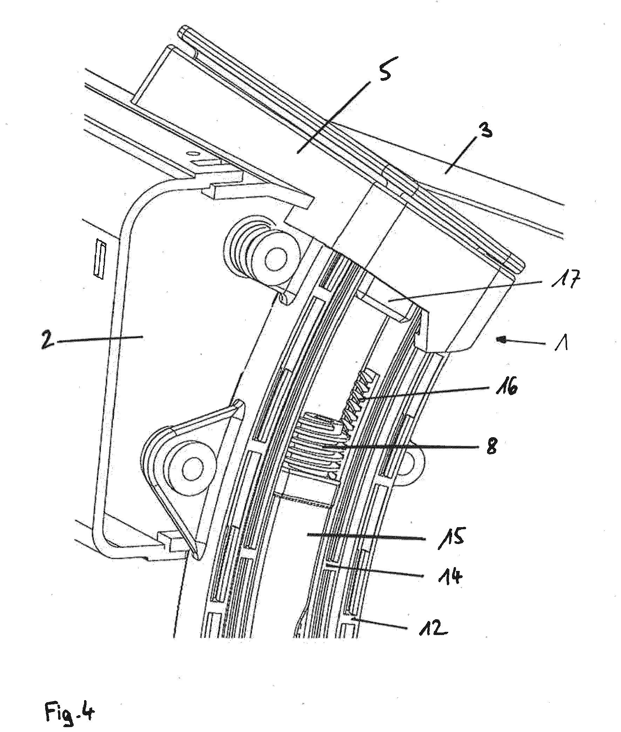

In der Figur 4 ist ein vergrößerter Ausschnitt des Gurtbringers 1 mit der Befestigung an dem Gurtaufroller 2 zu erkennen, wobei das erste Gehäuseteil 11 des Gehäuses und das erste Teil 13 des Zubringerarmes zwecks einer besseren Erkennbarkeit der in dem Gehäuse bzw. in dem Zubringerarm angeordneten Teile weggelassen wurden. Die mit der flexiblen Welle 7 drehfest verbundene Schnecke 8 greift in die radial nach außen gerichtete Verzahnung 16 des zweiten Teils 14 der Zubringerschiene ein. Das Führungsteil 5 ist mit dem Befestigungsansatz 17 drehfest in dem zweiten Hohlraum 24 der Zubringerschiene festgelegt und bildet darüber mit dieser eine bauliche Einheit.

In den Figuren 5 und 6 ist der Gurtbringer 1 mit eingezogenem und ausgefahrenem Zubringerarm zu erkennen. Der Führungsholm 15 mit der darin bzw. daran gehaltenen Antriebseinrichtung umfassend die flexible Welle 7, die Schnecke 8, die Getriebewelle 22 und der Elektromotor 4 sind ortsfest mit dem ebenfalls ortsfesten Gehäuse des Gurtbringers 1 verbunden, während die Zubringerschiene bei einer Aktivierung der Antriebseinrichtung teleskopartig ausgefahren wird und damit die ausfahrbare Einheit des Gurtbringers 1 bildet. Das Gurtband 3 wird über das Führungsteil 5 und die Führung in dem Schlitz 6 und den Zubringerarm bei einer Aktivierung der Antriebseinrichtung aus der in der Figur 5 zu erkennenden Parkposition in die in der Figur 6 zu erkennende Präsentierstellung bewegt, wobei das Führungsteil 5 mit dem Schlitz 6, durch welches das Gurtband 3 geführt ist, bei der Bewegung die Führung für das Gurtband 3 bildet und das Gurtband 3 dadurch mitnimmt.

Der Zubringerarm und die beiden Hohlräume 23 und 24 sind jeweils in einer Bogenform mit einer identischen Krümmung geformt und definieren dadurch den Verfahrweg des Führungsteils 5 und damit den Verfahrweg des darin geführten Gurtbandes in die Präsentierstellung.

Das Gehäuse, der Zubringerarm und der Führungsholm 15 sind jeweils für sich formstabil und ergänzen sich zu in dem überlappenden Abschnitt weiter zu einem versteiften Verbund. In der Parkstellung überlappen sich das Gehäuse, der Zubringerarm und der Führungsholm 15 über ihre nahezu vollständige Länge, so dass der Gurtbringer 1 mit dem Zubringerarm in der Parkstellung eine maximale Steifigkeit aufweist. Während der Ausfahrbewegung des Zubringerarmes nimmt die Länge des überlappenden Abschnittes kontinuierlich ab, so dass die Steifigkeit ebenfalls abnimmt. Trotzdem führt auch der in der Länge abnehmende Überlappungsabschnitt dazu, dass die Steifigkeit des Gurtbringerarmes erhöht wird, so dass er Torsions- und Querkräfte verbessert aufnehmen kann. Ferner wird die Torsionssteifigkeit des Gurtbringerarmes auch durch die Rechteckform des Gehäuses, des Zubringerarmes und des Führungsholmes 15 und durch die Krümmung des Gurtbringerarmes erhöht.

## Patentansprüche

1. Gurtbringer (1) für eine Sicherheitsgurteinrichtung eines Kraftfahrzeuges mit
- einem Zubringerarm mit einem daran vorgesehenen Führungsteil für ein Gurtband (3) der Sicherheitsgurteinrichtung,
- einer den Zubringerarm zu einer Ausfahrbewegung aus einer Parkstellung in eine Präsentierstellung antreibenden Antriebseinrichtung, und
- einem Gehäuse, an dem der Zubringerarm geführt ist, wobei
- das Gehäuse durch ein Hohlprofil mit einem länglichen ersten Hohlraum (23) gebildet ist, in dem der Zubringerarm angeordnet ist, und
- der erste Hohlraum (23) in Richtung der Ausfahrbewegung des Zubringerarmes eine den Verlauf der Ausfahrbewegung vorgebende Formgebung aufweist,
**dadurch gekennzeichnet, dass**
- der Zubringerarm eine Verzahnung (16) aufweist, und
- die Antriebseinrichtung eine zu einer Drehbewegung angetriebene feststehende erste Schnecke (8) aufweist, welche in die Verzahnung (16) des Zubringerarmes eingreift und bei einer Drehbewegung den Zubringerarm durch den Eingriff in die Verzahnung (16) zu der Ausfahrbewegung antreibt, und
die Antriebseinrichtung eine zu einer Drehbewegung antreibbare flexible Welle (7) aufweist, mit der die erste Schnecke (8) drehfest verbunden ist.

2. Gurtbringer (1) nach Anspruch 1, **dadurch gekennzeichnet, dass**
- das Gehäuse durch wenigstens zwei schalenförmige Gehäuseteile (11,12) gebildet ist, welche sich in der zusammengesetzten Form zu dem Hohlprofil ergänzen.

3. Gurtbringer (1) nach einem der Ansprüche 1 oder 2, **dadurch gekennzeichnet, dass**
- der Zubringerarm gekrümmt ist, und der erste Hohlraum (23) eine zu der Krümmung des Zubringerarmes identische Krümmung aufweist.

4. Gurtbringer (1) nach einem der Ansprüche 1 bis 3, **dadurch gekennzeichnet, dass**
- in dem Gehäuse eine Gleit- oder Anlagefläche vorgesehen ist, an der der Zubringerarm geführt und gelagert ist.

5. Gurtbringer (1) nach einem der Ansprüche 1 bis 4, **dadurch gekennzeichnet, dass**
- die Antriebseinrichtung wenigstens abschnittsweise in dem ersten Hohlraum (23) angeordnet ist.

6. Gurtbringer (1) nach einem der Ansprüche 1 bis 5, **dadurch gekennzeichnet, dass**
- der Zubringerarm einen zweiten Hohlraum (24) aufweist, in welchen die Antriebseinrichtung mit einem formstabilen Führungsholm (15) eingreift.

7. Gurtbringer (1) nach Anspruch 6, **dadurch gekennzeichnet, dass**
- das Führungsteil (5) mit einem Befestigungsansatz (17) in dem zweiten Hohlraum (24) des Zubringerarmes festgelegt ist.

8. Gurtbringer (1) nach einem der Ansprüche 1 bis 7, **dadurch gekennzeichnet, dass**
- der erste und/oder zweite Hohlraum (23,24) im Querschnitt eine vieleckige Form aufweist, an welcher sich der Zubringerarm in Bezug zu seiner Längsachse drehfest abstützt.

9. Fahrzeugsitz mit einem Gurtbringer (1) nach einem der Ansprüche 1 bis 8, **dadurch gekennzeichnet, dass**
- der Gurtbringer (1) an der Rückenlehne befestigt und mit dem Gehäuse in einen durch eine Sitzstruktur gebildeten Freiraum hineinragt.

## Claims

1. Belt feeder (1) for a safety belt device of a motor vehicle, comprising
- a feeder arm having a guide part provided thereon for a belt strap (3) of the safety belt device,
- a drive device which drives the feeder arm into an extension movement from a parking position into a presentation position, and
- a housing on which the feeder arm is guided,
- the housing being formed by a hollow profile having an elongate first cavity (23) in which the feeder arm is arranged, and
- the first cavity (23), in the direction of the extension movement of the feeder arm, having a shape which defines the course of the extension movement,
**characterized in that**
- the feeder arm has teeth (16), and
- the drive device has a fixed first worm (8) which is driven into a rotational movement, engages into the teeth (16) of the feeder arm and, during a rotational movement, drives the feeder arm into the extension movement by means of engaging into the teeth (16), and
the drive device has a flexible shaft (7) which can be driven into a rotational movement and to which the first worm (8) is connected for conjoint rotation.

2. Belt feeder (1) according to claim 1, **characterized in that**
- the housing is formed by at least two shell-like housing parts (11, 12) which complement one another in the assembled shape to form the hollow profile.

3. Belt feeder (1) according to either of claims 1 or 2, **characterized in that**
- the feeder arm is curved, and the first cavity (23) has a curvature identical to the curvature of the feeder arm.

4. Belt feeder (1) according to any of claims 1 to 3, **characterized in that**
- a sliding surface or contact surface on which the feeder arm is guided and mounted is provided in the housing.

5. Belt feeder (1) according to any of claims 1 to 4, **characterized in that**
- the drive device is arranged at least in part in the first cavity (23).

6. Belt feeder (1) according to any of claims 1 to 5, **characterized in that**
- the feeder arm has a second cavity (24) in which the drive device engages with a dimensionally stable guide bar (15).

7. Belt feeder (1) according to claim 6, **characterized in that**
- the guide part (5) is fixed to a fastening projection (17) in the second cavity (24) of the feeder arm.

8. Belt feeder (1) according to any of claims 1 to 7, **characterized in that**
- the first and/or second cavity (23, 24) has a polygonal shape in cross section, on which shape the feeder arm is non-rotatably supported with respect to its longitudinal axis.

9. Vehicle seat comprising a belt feeder (1) according to any of claims 1 to 8, **characterized in that**
- the belt feeder (1) is fastened to the backrest and projects, with the housing, into a free space formed by a seat structure.

## Revendications

1. Approche-ceinture (1) pour un dispositif formant ceinture de sécurité d'un véhicule automobile, comportant
- un bras d'approche comportant une partie de guidage prévue sur celui-ci pour une sangle de ceinture (3) du dispositif formant ceinture de sécurité,
- un dispositif d'entraînement entraînant le bras d'approche dans un mouvement d'extension depuis une position de stationnement vers une position de présentation, et
- un boîtier sur lequel le bras d'approche est guidé,
- le boîtier étant formé par un profilé creux comportant une première cavité (23) allongée dans laquelle le bras d'approche est disposé, et
- la première cavité (23) présentant une forme déterminant le déroulement du mouvement d'extension dans la direction du mouvement d'extension du bras d'approche,
**caractérisé en ce que**
- le bras d'approche présente une denture (16), et
- le dispositif d'entraînement présente une première vis sans fin (8) fixe entraînée dans un mouvement de rotation, laquelle vis sans fin entre en prise dans la denture (16) du bras d'approche et, lors d'un mouvement de rotation, entraîne le bras d'approche dans le mouvement d'extension par la mise en prise dans la denture (16), et
le dispositif d'entraînement présente un arbre flexible (7) pouvant être entraîné dans un mouvement de rotation et auquel la première vis sans fin (8) est reliée de manière solidaire en rotation.

2. Approche-ceinture (1) selon la revendication 1, **caractérisé en ce que**
- le boîtier est formé par au moins deux pièces de boîtier (11,12) en forme de coque qui se complètent dans la forme assemblée pour former le profilé creux.

3. Approche-ceinture (1) selon l'une des revendications 1 ou 2, **caractérisé en ce que**
- le bras d'approche est courbé, et la première cavité (23) présente une courbure identique à la courbure du bras d'approche.

4. Approche-ceinture (1) selon l'une des revendications 1 à 3, **caractérisé en ce que**
- une surface de glissement ou d'appui est prévue dans le boîtier, sur laquelle le bras d'approche est guidé et monté.

5. Approche-ceinture (1) selon l'une des revendications 1 à 4, **caractérisé en ce que**
- le dispositif d'entraînement est disposé au moins dans certaines régions dans la première cavité (23).

6. Approche-ceinture de sécurité (1) selon l'une des revendications 1 à 5, **caractérisé en ce que**
- le bras d'approche présente une seconde cavité (24) dans laquelle le dispositif d'entraînement vient en prise avec un montant de guidage (15) indéformable.

7. Approche-ceinture (1) selon la revendication 6, **caractérisé en ce que**
- la pièce de guidage (5) est fixée par un épaulement de fixation (17) dans la seconde cavité (24) du bras d'approche.

8. Approche-ceinture (1) selon l'une des revendications 1 à 7, **caractérisé en ce que**
- la première et/ou la seconde cavité (23, 24) présentent en section transversale une forme polygonale sur laquelle le bras d'approche s'appuie de manière solidaire en rotation par rapport à son axe longitudinal.

9. Siège de véhicule comportant un approche-ceinture (1) selon l'une des revendications 1 à 8, **caractérisé en ce que**
- l'approche-ceinture (1) est fixé au dossier et pénètre avec le boîtier dans un espace libre formé par une structure de siège.
